# FASCICULE DE BREVET EUROPEEN

(11) **EP 2 611 656 B1**
(45) Date de publication et mention de la délivrance du brevet: **23.07.2014**
(21) Numéro de dépôt: 11773171.1
(22) Date de dépôt: 02.09.2011
(51) Int. Cl.: B60R 25/02

(54) **ANTIVOL DE DIRECTION POUR VEHICULE AUTOMOBILE**
LENKUNGSVERRIEGELUNG FÜR EIN KRAFTFAHRZEUG
STEERING LOCK FOR A MOTOR VEHICLE

(30) Priorité: 02.09.2010 FR 1003513
(43) Date de publication de la demande: 10.07.2013
(73) Titulaire: U-Shin France SAS, 94046 Créteil Cedex (FR)
(72) Inventeur: LESUEUR, Guillaume, F-94046 CRETEIL CEDEX (FR); PERRIN, Christophe, F-94046 CRETEIL CEDEX (FR)
(74) Mandataire: Larger, Solène
(86) Numéro de dépôt international: PCT/EP2011/004424
(87) Numéro de publication internationale: WO 2012/028324

(56) Documents cités:
- EP-A1- 0 953 487
- EP-A1- 0 989 038
- EP-A1- 1 167 135
- EP-A1- 1 953 048
- EP-A2- 2 025 567

## Description

La présente invention concerne un antivol destiné à sécuriser un mécanisme de direction de véhicule. Plus particulièrement, la présente invention concerne un antivol mettant en oeuvre un pêne mobile à même d'être verrouillé par un moyen de supercondamnation.

Les antivols comportent des moyens de verrouillage comportant un pêne monté mobile dans un corps d'antivol, entre une position décondamnée dans laquelle il est destiné à être disposé à distance d'une colonne de direction, et une position condamnée dans laquelle il est destiné à bloquer ladite colonne. Le pêne est commandé en déplacement par l'intermédiaire d'un verrou rotatif intégré dans le corps d'antivol.

Certains antivols à sécurité renforcée comprennent en outre un moyen de supercondamnation apte à bloquer le pêne en position condamnée, en cas de tentative d'effraction. Une personne mal intentionnée peut en effet décider d'arracher le verrou pour accéder au pêne, afin de le désactiver en vue de libérer la rotation de la colonne de direction. La présence des moyens de supercondamnation permet de maintenir le pêne dans sa position condamnée, de sorte que la colonne demeure malgré tout bloquée en rotation.

Le document EP 2025567 A divulgue un antivol selon le préambule de la revendication 1.

La présente invention propose un antivol encore plus robuste que ceux de l'état de la technique.

A cet effet, l'invention à pour objet un antivol de direction pour véhicule automobile selon la revendication 1.

L'organe de retenue est retiré par exemple en cas de tentative d'effraction du verrou. Une fois que l'élément de blocage s'est déplacé de ces deux déplacements successifs et de directions distinctes pour bloquer le pêne en position condamnée, il ne peut plus retourner simplement dans la position initiale passive. Deux déplacements successifs inverses doivent être réalisés pour désengager l'élément de blocage du pêne, ce qui corse le désenclenchement du moyen de supercondamnation, compliquant sa réversibilité. Le moyen de supercondamnation à deux déplacements successifs de directions distinctes de l'élément de blocage est particulièrement efficace dans le cas d'antivols pour lesquels une personne mal intentionnée peut repousser l'élément de blocage du moyen de supercondamnation à l'encontre de son rappel élastique grâce à un outil de profil adapté.

Le premier déplacement est une translation et le deuxième déplacement est une rotation. Pour cela, ledit moyen élastique des moyens de supercondamnation comporte un ressort agencé entre ledit élément de blocage et ledit logement, sollicitant ledit élément de blocage en torsion et en compression.

Selon un mode de réalisation, le moyen de blocage en rotation bloque le pivotement dudit élément de blocage. La translation dudit élément de blocage sur une course initiale en direction dudit pêne, dégage ledit élément de blocage du moyen de blocage en rotation.

Par exemple, en position passive, la base dudit élément de blocage et le fond dudit logement coopèrent pour bloquer la rotation dudit élément de blocage. Pour cela, ledit élément de blocage peut présenter une forme de pion cylindrique dont la base comporte au moins une barrette radiale, la barrette radiale étant logée dans une forme complémentaire du fond du logement. La partie supérieure dudit logement peut présenter au moins un épaulement autorisant le pivotement dudit élément de blocage jusqu'à une butée dudit épaulement, consécutivement à la translation dudit élément de blocage vers le pêne, dégageant la base dudit élément de blocage du fond dudit logement.

Selon un exemple de réalisation, ledit organe de retenue comporte une pige dont une première extrémité est destinée à appuyer ledit élément de blocage pour le retenir en position passive et dont une deuxième extrémité est destinée à être fixée au verrou. En outre, l'antivol peut comporter une zone fusible configurée pour générer une amorce de rupture dans une région voisine de ladite pige. On favorise ainsi la rupture de l'antivol et notamment de la pige en cas de tentative d'effraction de manière à conserver le blocage de la colonne de direction par les moyens de verrouillage et à provoquer le déclenchement de la supercondamnation.

L'antivol comporte une première et une deuxième partie de corps d'antivol et un verrou inséré dans ladite deuxième partie de corps d'antivol, ladite première partie de corps d'antivol recevant les moyens de verrouillage et de supercondamnation. Ledit verrou et ladite première partie de corps d'antivol peuvent respectivement comprendre un moyen de guidage dudit organe de retenue, ledit moyen de guidage dudit verrou présentant une bague cerclant ladite pige au niveau de la zone fusible. Ainsi, en cas de tentative d'effraction par rotation ou flexion en force du verrou, au moment où un couple est exercé sur le verrou, l'antivol tend à se rompre dans la zone fusible. La pige est alors maintenue par le moyen de guidage de la première partie de corps d'antivol tandis que la bague du moyen de guidage du verrou appuie latéralement sur la pige en laissant des zones de dégagement de part et d'autre de la bague amplifiant la flexion et donc, favorisant la casse de la pige dans la zone fusible.

En outre, l'antivol peut présenter un capot de protection se prolongeant par au moins une patte d'accrochage coopérant avec la pige de l'organe de retenue pour se retenir à l'organe de retenue. Ainsi, en cas de tentative d'effraction du capot de protection, celui-ci transmet le mouvement d'enfoncement ou d'arrachement par les pattes d'accrochage à la pige du moyen de retenue qui se déforme ou se casse. Lorsqu'il est cassé ou déformé, l'organe de retenue n'est plus en appui contre l'élément de blocage qui, alors libéré, peut bloquer le pêne en position condamnée.

Par exemple, ledit capot de protection comporte une plaque présentant une forme sensiblement en équerre se prolongeant par trois pattes d'accrochage venant en appui de part et d'autre de la tige de l'organe de retenue. La forme en équerre protège le moyen d'entraînement du pêne et le pêne lui-même d'une éventuelle tentative d'effraction latérale, de sorte que ceux-ci ne peuvent pas être déplacés à l'écart de la colonne de direction sans déclencher le moyen de supercondamnation.

D'autres avantages et caractéristiques apparaîtront à la lecture de la description de l'invention, ainsi que sur les figures annexées sur lesquelles :
- la figure 1 représente une vue en perspective d'un antivol à l'état assemblé,
- la figure 2 représente une partie de l'antivol de la figure 1,
- la figure 3 représente l'antivol de la figure 1 à l'état désassemblé,
- la figure 4 représente des éléments assemblés et en perspective de l'antivol de la figure 1 en position passive,
- la figure 5 est une vue à l'état éclaté d'éléments du moyen de supercondamnation,
- la figure 6 est une vue analogue à la figure 5 ayant pivoté d'environ 90°,
- la figure 7 est une vue partielle agrandie de la figure 4 représentant des éléments du moyen de supercondamnation en position passive,
- la figure 8 est une vue analogue à la figure 7 dans laquelle un élément de blocage bloque le pêne en position condamnée,
- la figure 9 représente l'antivol de la figure 1 suivant un autre angle de vue et sur lequel on a représenté une rotation en force d'une partie avant de l'antivol,
- la figure 10 est une vue agrandie d'un détail de la figure 4 dans une zone fusible,
- la figure 11 est une vue d'un détail de la figure 4, dans laquelle un stator de verrou est vu en coupe,
- la figure 12 est une vue en perspective d'un détail du stator de verrou de la figure 10,
- la figure 13 représente des éléments assemblés et en perspective de l'antivol de la figure 1 en position passive, et
- la figure 14 est une vue agrandie d'éléments de l'antivol de la figure 13.

Sur ces figures, les éléments identiques portent les mêmes numéros de référence.

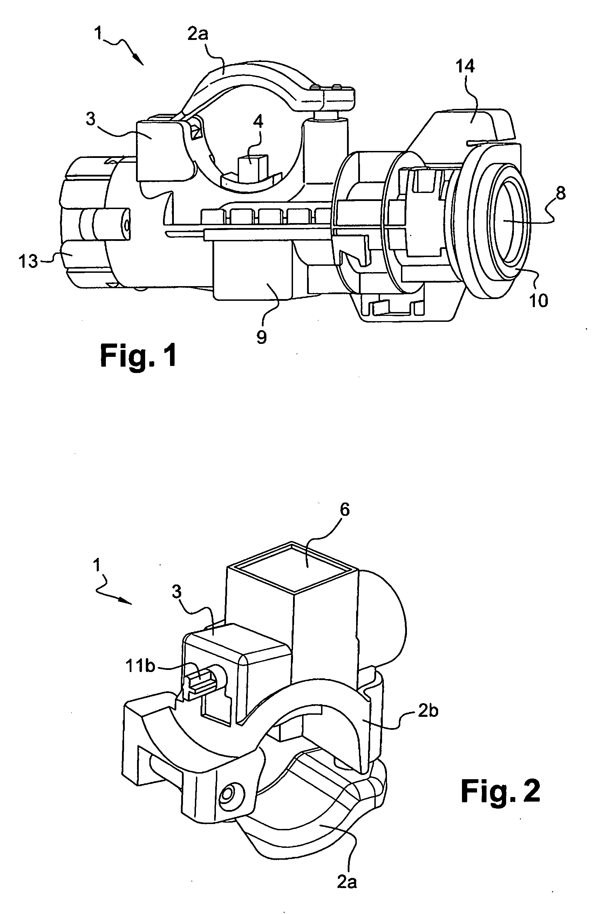

Les figures 1 à 14 illustrent un exemple de réalisation d'un antivol de direction pour véhicule automobile 1. On peut voir sur les figures 1, 2 et 3 que l'antivol 1 comporte un collier de serrage présentant un premier demi-collier pivotant 2a et un deuxième demi-collier 2b, reliés d'une part, par une liaison pivotante et d'autre part, par un moyen de fixation, afin de s'assembler autour d'une colonne de direction (non représentée).

Le deuxième demi-collier 2b est intégré dans une première partie corps d'antivol 3 (figure 2) qui loge un moyen de verrouillage de la colonne de direction et un moyen de supercondamnation agencé pour verrouiller le moyen de verrouillage en position condamnée suite à une tentative d'effraction de l'antivol 1. La première partie du corps d'antivol 3 est par exemple en matériau « Zamak » de manière à présenter une bonne résistance mécanique en position sur la colonne, protégeant les moyens de verrouillage et de supercondamnation.

Le moyen de verrouillage comporte un pêne 4 monté coulissant dans la première partie du corps d'antivol 3, via un guide pêne, entre une position décondamnée dans laquelle il est en position escamotée arrière, à distance de la colonne de direction et une position condamnée (figure 1) dans laquelle il est destiné à bloquer la colonne en faisant saillie du deuxième demi-collier 2b pour coopérer classiquement par emboîtement avec un élément de la colonne de direction. Le moyen de verrouillage comporte en outre un moyen d'entraînement 5 du pêne 4 apte à entraîner le pêne 4 en position condamnée ou décondamnée. Le pêne 4 présente par exemple des crochets pouvant s'assembler avec des doigts complémentaires du moyen d'entraînement 5. Le déplacement du moyen d'entraînement 5 est commandé par la rotation d'un rotor de verrou. En outre, l'antivol 1 peut comporter un capot de protection 6 (figure 2), disposé sur une ouverture de ladite première partie du corps d'antivol 3 en regard du pêne 4, pour fermer cette ouverture, par ailleurs nécessaire à la fabrication de l'antivol 1 lors du démoulage de la première partie du corps d'antivol 3.

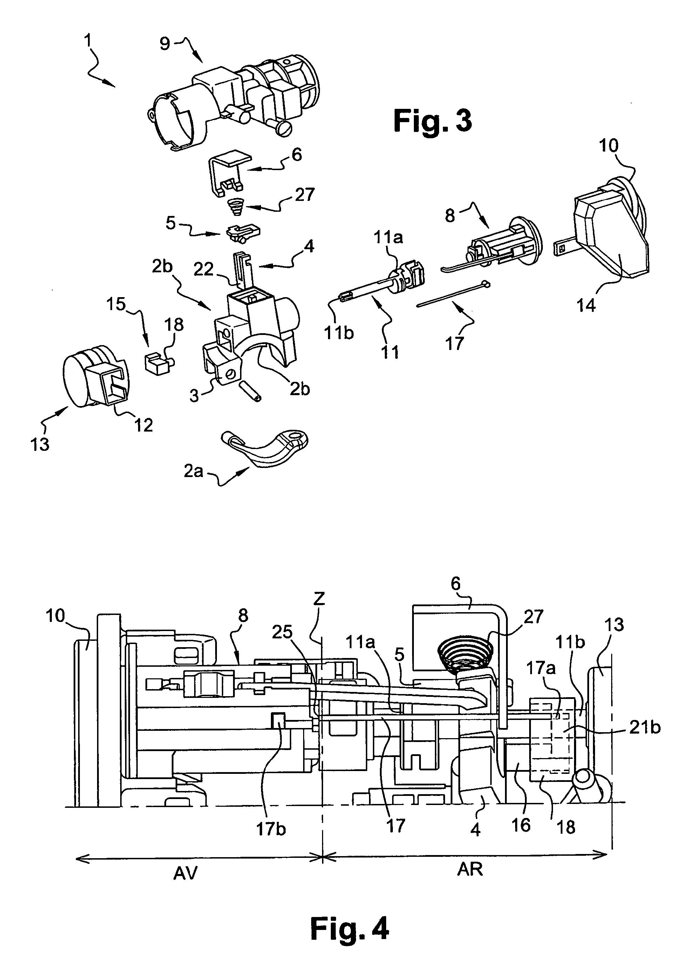

Le verrou 8 est destiné à être inséré et solidarisé à l'intérieur d'une deuxième partie du corps d'antivol 9, par exemple en plastique, de l'antivol 1, couvrant également partiellement la première partie du corps d'antivol 3. Le verrou 8 comporte un cache 10 destiné à être fixé en face avant de la deuxième partie du corps d'antivol 9. Le cache 10 présente une ouverture circulaire pour rendre accessible une entrée de clef à l'avant du verrou 8. Une came 11 de l'antivol 1 est destinée à être solidarisée à l'extrémité arrière du verrou 8. Une fois montés ensemble dans la deuxième partie du corps d'antivol 9, le rotor de verrou et la came 11 tournent ensemble, une première partie de la came 11a entraînant le moyen d'entraînement 5 du pêne 4. Le verrou 8 est également destiné à commander l'activation des fonctions électriques du véhicule, ainsi que le démarrage du moteur. Il est pour cela couplé par l'intermédiaire d'une deuxième partie de la came 11b à un interrupteur (non représenté) destiné à être logé dans un connecteur adapté 12, d'un corps de connecteur 13 de l'antivol 1 qui est par exemple, fixé à la deuxième partie du corps d'antivol 9 (voir figure 3). L'antivol 1 peut également comporter un moyen décodeur 14 permettant de décoder le code d'une clef du verrou.

L'antivol 1 présente par exemple une forme générale allongée selon l'axe longitudinal du verrou 8. Comme représenté en pointillés sur la figure 4, l'antivol 1 comporte une zone fusible Z plus vulnérable, destinée à céder en premier en cas de sollicitations de torsion, flexion, arrachement .... La zone fusible Z sépare ainsi une partie avant AV de l'antivol 1 comportant le verrou 8, d'une partie arrière AR comportant la première partie du corps d'antivol 3 et les moyens de verrouillage et de supercondamnation. On favorise ainsi la rupture de l'antivol au niveau de la zone fusible Z, pour garantir la supercondamnation du moyen de verrouillage en cas de vandalisme.

Mieux visible sur les figures 4, 5 et 6, le moyen de supercondamnation 15 comporte un élément de blocage 16 configuré pour bloquer le pêne 4 en position condamnée, l'élément de blocage 16 étant sollicité contre le pêne 4 par un moyen élastique du moyen de supercondamnation 15 et étant retenu en position passive par un organe de retenue 17 du moyen de supercondamnation 15. L'organe de retenue 17 comporte par exemple une pige dont une première extrémité 17a est destinée à appuyer l'élément de blocage 16 pour le retenir en position passive. Une deuxième extrémité 17b de la pige de l'organe de retenue 17 est fixée au verrou 8 (voir figure 4).

Le moyen de supercondamnation 15 comporte en outre un logement 18 dans lequel l'élément de blocage 16 est partiellement reçu, conformé pour coopérer avec l'élément de blocage 16 en le guidant vers le pêne 4 suivant deux déplacements successifs et de directions distinctes consécutivement au retrait de l'organe de retenue 17 pour bloquer le pêne en position condamnée. L'organe de retenue 17 est retiré en cas de tentative de désolidarisation du verrou 8.

Les déplacements successifs doivent être de direction distincte, c'est-à-dire qu'un premier déplacement est une translation et un deuxième déplacement est une rotation.

Dans l'exemple décrit ci-après, le logement 18 est conformé pour coopérer avec l'élément de blocage 16 en le guidant suivant un premier déplacement de translation et un deuxième déplacement successif de rotation pour bloquer le pêne 4 en position condamnée consécutivement au retrait de l'organe de retenue 17.

Pour cela, on peut prévoir que le moyen élastique des moyens de supercondamnation 15 comporte un ressort 20, par exemple hélicoïdal, agencé entre l'élément de blocage 16 et le fond 19a du logement 19, et sollicitant l'élément de blocage 16 en torsion et en compression.

En outre, un moyen de blocage en rotation bloque le pivotement de l'élément de blocage 16 et autorise sa translation. La translation de l'élément de blocage 16 sur une course initiale C1 en direction du pêne 4 suite au retrait de l'élément de retenue 17, dégage l'élément de blocage 16 du moyen de blocage en rotation, ce qui permet sa rotation.

Par exemple, en position passive, la base de l'élément de blocage 16 et le fond 19a du logement 19 coopèrent pour bloquer la rotation de l'élément de blocage 16.

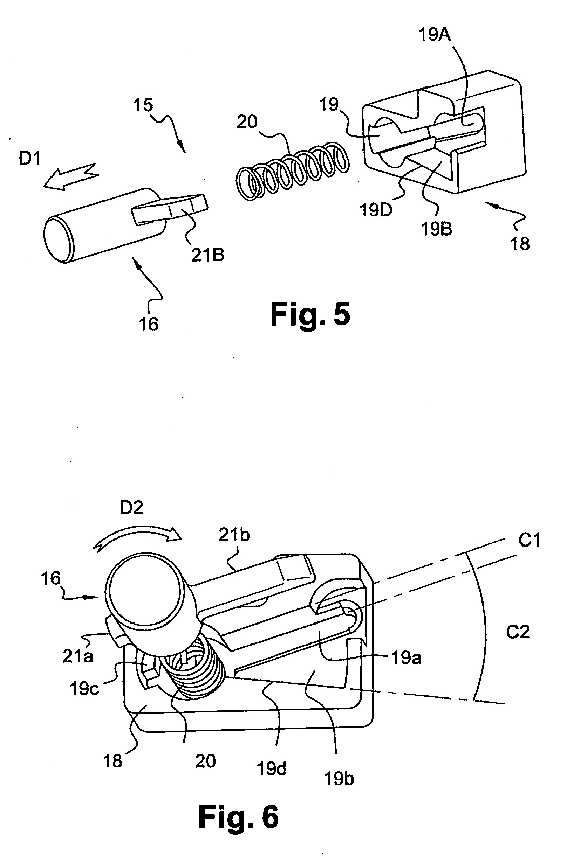

Comme illustré sur l'exemple des figures 4, 5 et 6, le logement 19 est ménagé dans un socle 18 du moyen de supercondamnation 15. L'élément de blocage 16 présente une forme de pion cylindrique dont la base comporte une première et une deuxième barrettes radiales 21a, 21b, diamétralement opposées. Les barrettes radiales 21a, 21b sont logées dans une forme complémentaire du fond 19a du logement 19 (voir figure 6). La course initiale C1 sur laquelle l'élément de blocage 16 est bloqué en rotation correspond à l'épaisseur du fond 19a du logement 19 conformé pour bloquer la rotation des barrettes radiales 21a, 21b. La partie supérieure du logement 19 présente en outre deux épaulements 19b, 19c destinés à coopérer avec les barrettes radiales 21a, 21b de la base de l'élément de blocage 16 pour autoriser le pivotement de l'élément de blocage 16 jusqu'à une butée 19d de l'épaulement 19b consécutivement à la translation de l'élément de blocage 16 vers le pêne 4 dégageant la base de l'élément de blocage 16 du fond 19a du logement 19.

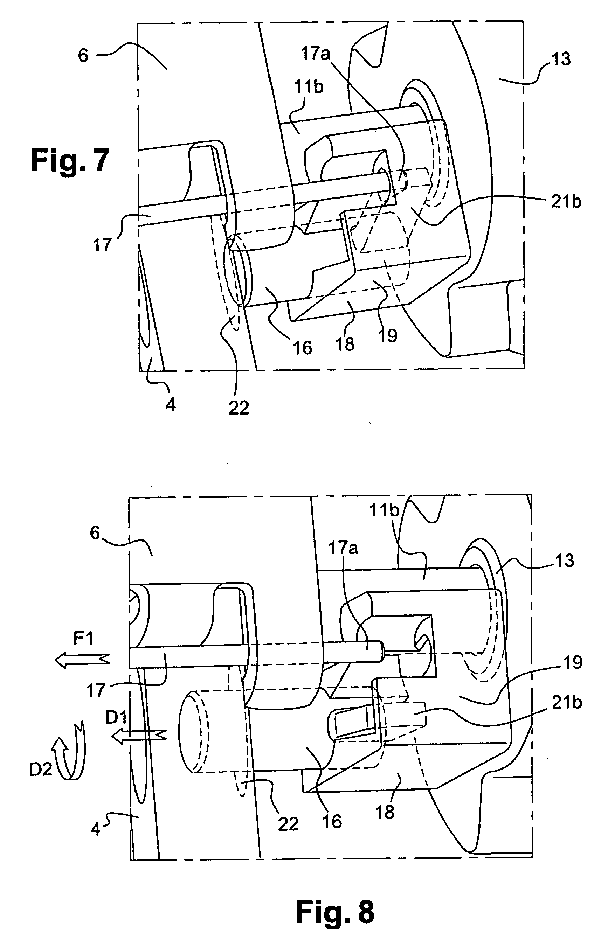

Ainsi, en position passive (figure 7), l'élément de blocage 16 partiellement reçu dans le logement 19 est élastiquement sollicité en torsion autour de son axe de révolution mais est maintenu bloqué en rotation par les parois latérales du fond 19a du logement 19 du socle 18 recevant les barrettes radiales 21a, 21b. L'élément de blocage 16 est en outre sollicité à l'encontre du pêne 4 et maintenu à l'écart par la première extrémité 17a de la pige de l'organe de retenue 17 qui appuie sur le nez d'une barrette radiale 21b de l'élément de blocage 16 pour le retenir.

En cas d'arrachement du verrou 8 par une personne mal intentionnée, l'organe de retenue 17, dont la deuxième extrémité 17b est solidaire du verrou, est entraîné avec le verrou 8 désolidarisé selon la direction de la flèche F1 (figure 8) et n'appuie plus sur le nez de la barrette radiale 21 b. L'élément de blocage 16 qui n'est plus retenu en translation mais qui reste bloqué en rotation, se translate en faisant saillie vers le pêne 4 (flèche D1 sur les figures 5 et 8) pour s'engager dans une cavité 22 du pêne 4 et le bloquer en position condamnée (figure 8). La translation de l'élément de blocage 16 en direction du pêne 4 sur la course initiale C1 dégage la base de l'élément de blocage 16 du fond 19a du logement 19 vers la partie supérieure du logement 19. L'élément de blocage 16 pivote alors selon la flèche D2 (figures 6 et 8) jusqu'à une butée 19d de l'épaulement 19b après une course finale C2, qui correspond à l'angle de dégagement de l'épaulement 19b.

Une fois que l'élément de blocage 16 a pivoté dans le logement 19, il ne peut plus retourner simplement dans la position initiale passive. Deux déplacements successifs inverses doivent être réalisés pour désengager l'élément de blocage 16 de la cavité 22 du pêne 4, ce qui corse le désenclenchement du moyen de supercondamnation 15, compliquant sa réversibilité. Le moyen de supercondamnation à deux déplacements successifs et de directions distinctes de l'élément de blocage est particulièrement efficace dans le cas d'antivol comme celui représenté sur les figures, dans lequel sans le double déplacement consécutif en translation et rotation de l'élément de blocage 16, une personne mal intentionnée aurait peut-être pu repousser l'élément de blocage à l'encontre de son rappel élastique par l'introduction d'un outil de profil adapté dans la cavité débouchante 22 du pêne 4.

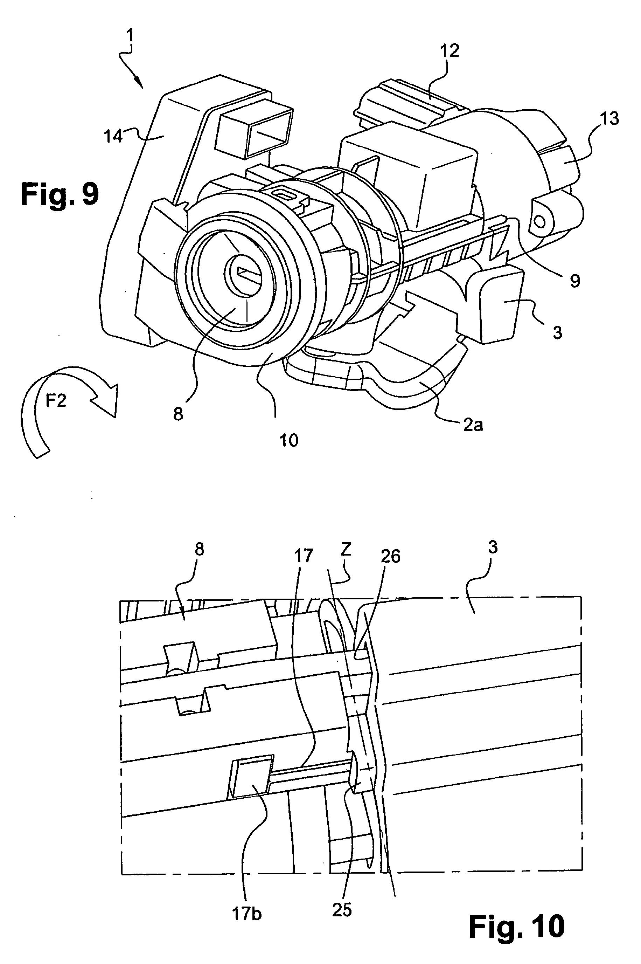

De même, en cas de rotation en force du verrou 8 par une personne mal intentionnée (voir flèche F2 sur la figure 9), ou de flexion en force du verrou 8, l'organe de retenue 17 solidaire du verrou 8 à sa deuxième extrémité 17b, se casse avec la rotation du verrou 8. Une première partie de l'organe de retenue 17 comprenant la deuxième extrémité 17b part avec le verrou 8 désolidarisé tandis qu'une deuxième partie de l'organe de retenue 17 est repoussée vers l'extérieur du corps de l'antivol 3 par le moyen élastique. Comme précédemment, l'élément de blocage 16 qui n'est plus retenu peut alors bloquer le pêne 4 en position condamnée.

On peut configurer la zone fusible Z pour générer une amorce de rupture dans une région voisine de l'organe de retenue 17, tandis que la région de meilleure résistance de la zone de rupture est agencé sur le côté opposé de l'antivol 1, dans une région éloignée de l'élément de rupture 17. Cette conception de la zone fusible Z permet le déclenchement de la supercondamnation au plus tôt lors d'une tentative d'effraction de la partie avant AV de l'antivol 1.

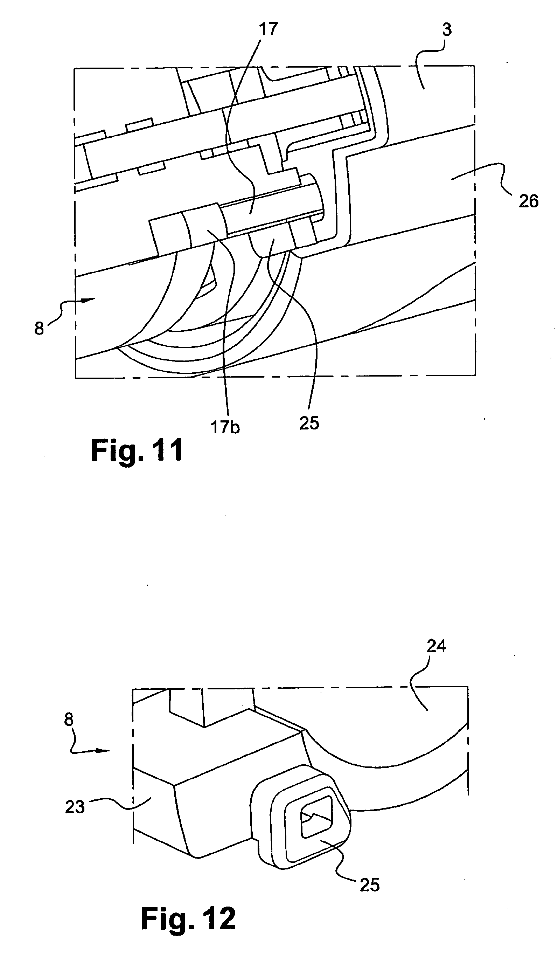

Comme on peut le voir sur la figure 10, le verrou 8 et la première partie du corps d'antivol 3 peuvent comporter un moyen de guidage de la pige de l'organe de retenue 17. Le verrou 8 présente par exemple un stator de verrou 23 (figure 12) présentant une partie intérieure cylindrique 24 pour recevoir le rotor de verrou et présentant en outre un moyen de guidage de la pige de l'organe de retenue 17. Le moyen de guidage du verrou 8 comporte par exemple une bague 25 cerclant la pige au niveau de la zone fusible Z (figures 10, 11 et 12). La première partie du corps d'antivol 3 comporte par exemple une rainure de guidage 26. Ainsi, en cas de tentative d'effraction par rotation ou flexion en force du verrou 8, au moment où un couple s'exerce sur le verrou 8, l'antivol 1 tend à se rompre dans la zone fusible Z. La pige est maintenue dans la rainure de guidage 26 de la première partie de corps d'antivol 3 tandis que la bague 25 du moyen de guidage du verrou 8 appuie latéralement sur la pige en laissant des zones de dégagement de part et d'autre de la bague 25 amplifiant le cisaillement et donc favorisant la casse de la pige dans la zone fusible Z.

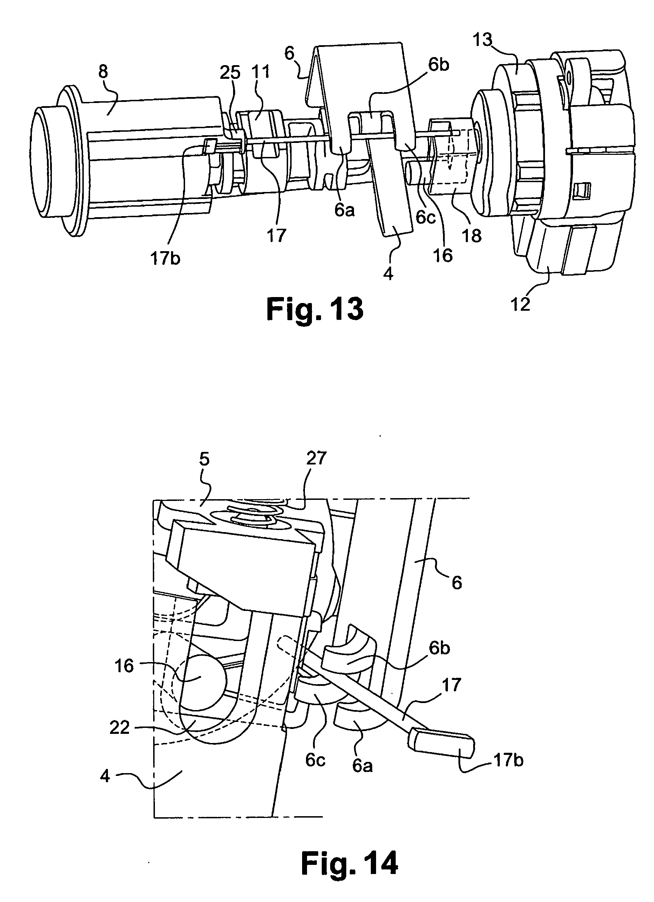

Egalement, pour éviter une tentative d'effraction par enfoncement ou arrachement du capot de protection 6 par une personne mal intentionnée qui souhaiterait atteindre les moyens de verrouillage, on prévoit que le capot de protection 6 soit couplé à la pige de l'organe de retenue 17. Pour cela, le capot de protection 6 comporte une plaque présentant une forme sensiblement pliée en équerre (figures 3 et 13) se prolongeant dans la première partie du corps d'antivol 3 par au moins une patte d'accrochage coopérant avec la pige de l'organe de retenue 17 pour se retenir à l'organe de retenue 17. Le capot de protection 6 et le moyen d'entraînement 5 du pêne 4 sont maintenus à distance par un moyen élastique supplémentaire, tel qu'un ressort 27. Par exemple, le capot de protection 6 se prolonge par trois pattes d'accrochage 6a, 6b, 6c venant en appui de part et d'autre de la tige de l'organe de retenue 17 (figure 14). Ainsi, le capot de protection 6 est retenu à la pige de l'organe de retenue 17. En cas de tentative d'effraction du capot de protection 6, celui-ci transmet le mouvement d'enfoncement ou d'arrachement à la pige du moyen de retenue 17 qui se déforme ou se casse. La première extrémité 17a de l'organe de retenue 17 n'est alors plus en appui contre l'élément de blocage 16 qui, alors libéré peut, comme précédemment, bloquer le pêne 4 en position condamnée. Par ailleurs, la forme en équerre protège le moyen d'entraînement 5 du pêne et le pêne 4 lui-même d'une éventuelle tentative d'effraction latérale, de sorte que ceux-ci ne peuvent pas être déplacés à l'écart de la colonne de direction sans déclencher le moyen de supercondamnation.

Ainsi, au moins trois cas de tentatives d'effraction par une personne mal intentionnée cherchant à désactiver le moyen de verrouillage de la colonne de direction du véhicule automobile conduisent au déclenchement du moyen de supercondamnation de l'antivol 1. En cas d'arrachement du verrou 8, de rotation ou flexion en force du verrou 8 ou en cas de tentative d'arrachement ou d'enfoncement du capot de protection 6, le moyen de supercondamnation 15 est enclenché bloquant le pêne 4 en position condamnée. L'élément de blocage 16 ne peut plus retourner simplement dans la position initiale passive sans effectuer deux déplacements successifs inverses D2, D1 pour se désengager du pêne 4, ce qui renforce l'inviolabilité de l'antivol 1.

## Revendications

1. Antivol de direction pour véhicule automobile comprenant :
- un moyen de verrouillage comportant un pêne (4) monté mobile entre une position décondamnée dans laquelle il est destiné à être disposé à distance d'une colonne de direction, et une position condamnée dans laquelle il est destiné à bloquer ladite colonne,
- un moyen de supercondamnation (15) comportant un élément de blocage (16) configuré pour bloquer le pêne (4) en position condamnée, ledit élément de blocage (16) étant sollicité contre ledit pêne (4) par un moyen élastique du moyen de supercondamnation (15) et étant retenu dans une position passive par un organe de retenue (17) du moyen de supercondamnation (15),
le moyen de supercondamnation (15) comportant un logement (19) conformé pour coopérer avec ledit élément de blocage (16) en le guidant vers le pêne (4) suivant deux déplacements successifs et de directions distinctes (D1, D2), consécutivement au retrait de l'organe de retenue (17) pour bloquer ledit pêne (4) en position condamnée, le premier déplacement (D1) étant une translation et le deuxième déplacement (D2) une rotation, ledit moyen élastique des moyens de supercondamnation (15) comportant un ressort (20) agencé entre ledit élément de blocage (16) et ledit logement (19), **caractérisé en ce qu'**il sollicite ledit élément de blocage (16) en torsion et en compression.

2. Antivol selon la revendication précédente, **caractérisé en ce qu'**un moyen de blocage en rotation bloque le pivotement dudit élément de blocage (16) et **en ce que** la translation dudit élément de blocage (16) sur une course initiale (C1) en direction dudit pêne (4) dégage ledit élément de blocage (16) du moyen de blocage en rotation.

3. Antivol selon la revendication précédente, **caractérisé en ce qu'**en position passive, la base dudit élément de blocage (16) et le fond (19a) dudit logement (19) coopèrent pour bloquer la rotation dudit élément de blocage (16).

4. Antivol selon la revendication précédente, **caractérisé en ce que** ledit élément de blocage (16) présente une forme de pion cylindrique dont la base comporte au moins une barrette radiale (21 a, 21 b), la barrette radiale (21 a, 21 b) étant logée dans une forme complémentaire du fond (19a) du logement (19).

5. Antivol selon l'une des revendications 2 à 4, **caractérisé en ce que** la partie supérieure dudit logement (19) présente au moins un épaulement (19b, 19c) autorisant le pivotement dudit élément de blocage (16) jusqu'à une butée (19d) dudit épaulement (19b), consécutivement à la translation dudit élément de blocage (16) vers le pêne (4) dégageant la base dudit élément de blocage (16) du fond (19a) dudit logement (19).

6. Antivol selon l'une des revendications 1 à 5, **caractérisé en ce que** ledit organe de retenue (17) comporte une pige dont une première extrémité (17a) est destinée à appuyer ledit élément de blocage (16) pour le retenir en position passive et dont une deuxième extrémité (17b) est destinée à être fixée au verrou (8).

7. Antivol selon la revendication précédente, **caractérisé en ce qu'**il comporte une zone fusible (Z) configurée pour générer une amorce de rupture dans une région voisine de ladite pige.

8. Antivol selon la revendication précédente, **caractérisé en ce qu'**il comporte une première et une deuxième partie de corps d'antivol (3, 9) et un verrou (8) inséré dans ladite deuxième partie de corps d'antivol (9), une première partie de corps d'antivol (3) recevant les moyens de verrouillage et de supercondamnation, ledit verrou (8) et ladite première partie de corps d'antivol (3) comprenant respectivement un moyen de guidage dudit organe de retenue (17), ledit moyen de guidage dudit verrou présentant une bague (25) cerclant ladite pige au niveau de la zone fusible (Z).

9. Antivol selon l'une des revendications 6 à 8, **caractérisé en ce qu'**il comporte un capot de protection (6) se prolongeant par au moins une patte d'accrochage (6a, 6b, 6c) coopérant avec la pige de l'organe de retenue (17) pour se retenir à l'organe de retenue (17).

10. Antivol selon la revendication précédente, **caractérisé en ce que** ledit capot de protection (6) comporte une plaque présentant une forme sensiblement en équerre se prolongeant par trois pattes d'accrochage (6a, 6b, 6c) venant en appui de part et d'autre de la tige de l'organe de retenue (17).

## Patentansprüche

1. Kraftfahrzeug-Lenkradschloss umfassend:
- eine Verriegelungsvorrichtung mit einem Riegel (4), der beweglich zwischen einer entriegelten Stellung, in der er dazu bestimmt ist, im Abstand zu einer Lenksäule angeordnet zu werden, und einer verriegelten Stellung montiert ist, in der er dazu bestimmt ist, die besagte Säule zu blockieren,
- eine Vorrichtung zur Master-Verriegelung (15), die ein Blockierelement (16) enthält, das konfiguriert ist, um den Riegel (4) in der verriegelten Stellung zu blockieren, wobei das besagte Blockierelement (16) durch eine elastische Vorrichtung der Vorrichtung zur Master-Verriegelung (15) gegen den besagten Riegel (4) vorgespannt wird, und durch ein Rückhalteorgan (17) der Vorrichtung zur Master-Verriegelung (15) in einer passiven Stellung zurückgehalten wird,
wobei die Vorrichtung zur Master-Verriegelung (15) eine Aufnahme (19) enthält, die ausgeformt ist, um mit dem besagten Blockierelement (16) zusammenzuwirken, indem sie es nach dem Rückzug des Rückhalteorgans (17) durch zwei aufeinander folgenden Bewegungen und in verschiedene Richtungen (D1, D2) zum Riegel (4) führt, um den besagten Riegel (4) in der verriegelten Stellung zu blockieren, wobei die erste Bewegung (D1) eine Translationsbewegung, und die zweite Bewegung (D2) eine Rotationsbewegung ist, und die besagte elastische Vorrichtung der Vorrichtungen zur Master-Verriegelung (15) eine Feder (20) umfasst, die zwischen dem besagten Blockierelement (16) und der besagten Aufnahme (19) angeordnet ist, **dadurch gekennzeichnet, dass** sie das besagte Blockierelement (16) verdreht und zusammengedrückt vorspannt.

2. Lenkradschloss nach dem vorherigen Anspruch, **dadurch gekennzeichnet, dass** eine Vorrichtung zum Blockieren der Drehbewegung die Drehung des besagten Blockierelements (16) blockiert, und dadurch, dass die Translationsbewegung des besagten Blockierelements (16) auf einem Initialhub (C1) in Richtung des besagten Riegels (4) das besagte Blockierelement (16) aus der Vorrichtung zum Blockieren der Drehbewegung freigibt.

3. Lenkradschloss nach dem vorherigen Anspruch, **dadurch gekennzeichnet, dass** die Basis des besagten Blockierelements (16) und der Boden (19a) der besagten Aufnahme (19) in der passiven Stellung zusammenwirken, um die Drehung des besagten Blockierelements (16) zu blockieren.

4. Lenkradschloss nach dem vorherigen Anspruch, **dadurch gekennzeichnet, dass** das besagte Blockierelement (16) die Form eines zylindrischen Zapfens aufweist, dessen Basis zumindest eine radiale Leiste (21a, 21b) umfasst, wobei die radiale Leiste (21a, 21b) in einer ergänzenden Form des Bodens (19a) der Aufnahme (19) aufgenommen wird.

5. Lenkradschloss nach einem der Ansprüche 2 bis 4, **dadurch gekennzeichnet, dass** der obere Abschnitt der besagten Aufnahme (19) zumindest einen Vorsprung (19b, 19c) aufweist, der die Drehung des besagten Blockierelements (16) bis auf einen Anschlag (19d) des besagten Vorsprungs (19b) nach der Translationsbewegung des besagten Blockierelements (16) in Richtung des Riegels (4) erlaubt, und so die Basis des besagten Blockierelements (16) vom Boden (19a) der Aufnahme (19) freigibt.

6. Lenkradschloss nach einem der Ansprüche 1 bis 5, **dadurch gekennzeichnet, dass** das besagte Rückhalteorgan (17) einen Stift umfasst, dessen erstes Ende (17a) dazu bestimmt ist, auf das besagte Blockierelement (16) zu drücken, um es in der passiven Stellung zu halten, und dessen zweites Ende (17b) dazu bestimmt ist, am Riegel (8) befestigt zu werden.

7. Lenkradschloss nach dem vorherigen Anspruch, **dadurch gekennzeichnet, dass** es eine Sollbruchzone (Z) umfasst, die konfiguriert wurde, um eine Bruchstelle in einem Bereich zu generieren, der neben dem besagten Stift liegt.

8. Lenkradschloss nach dem vorherigen Anspruch, **dadurch gekennzeichnet, dass** es einen ersten und einen zweiten Abschnitt eines Lenkradschlossgehäuses (3, 9) und einen Riegel (8) umfasst, der in den besagten zweiten Abschnitt des Lenkradschlossgehäuses (9) eingeführt wird, wobei ein erster Abschnitt des Lenkradschlossgehäuses (3) die Vorrichtungen zur Verriegelung und zur Master-Verriegelung aufnimmt, und der besagte Riegel (8) und der besagte erste Abschnitt des Lenkradschlossgehäuses (3) jeweils eine Vorrichtung zum Führen des besagten Rückhalteorgans (17) umfassen, und die besagte Vorrichtung zum Führen des besagten Riegels einen Ring (25) aufweist, der den besagten Stift im Bereich der Sollbruchstelle (Z) umgibt.

9. Lenkradschloss nach einem der Ansprüche 6 bis 8, **dadurch gekennzeichnet, dass** es eine Schutzabdeckung (6) umfasst, die sich in zumindest einer Befestigungsklammer (6a, 6b, 6c) fortsetzt, die mit dem Stift des Rückhalteorgans (17) zusammenwirkt, um sich im Rückhalteorgan (17) zu halten.

10. Lenkradschloss nach dem vorherigen Anspruch, **dadurch gekennzeichnet, dass** die besagte Schutzabdeckung (6) eine Platte umfasst, die eine Winkelform aufweist, und die sich in zumindest einer Befestigungsklammer (6a, 6b, 6c) fortsetzt, die sich beiderseits des Gestänges des Rückhalteorgans (17) anlegt.

## Claims

1. Motor vehicle steering lock comprising:
- a locking means comprising a bolt (4) mounted mobile between an unlocked position wherein it is intended to be arranged at a distance from a steering column, and a locked position wherein it is intended to block said column.
- a deadlocking means (15) comprising a blocking element (16) configured to immobilise the bolt (4) in the locked position, said blocking element (16) being urged against said bolt (4) by an elastic means of the deadlocking means (15) and being held in a passive position by a retaining member (17) of the deadlocking means (15),
the deadlocking means (15) comprising a housing (19) shaped to cooperate with said blocking element (16) by guiding it towards the bolt (4) according to two successive movements and distinct directions (D1, D2), following the withdrawal of the retaining member (17) for immobilising said bolt (4) in the locked position, the first movement (D1) being a translation and the second movement (D2) a rotation, said elastic means of the deadlocking means (15) comprising a spring (20) arranged between said blocking element (16) and said housing (19), **characterised in that** it urges said blocking element (16) in torsion and in compression.

2. Antitheft device as claimed in the preceding claim, **characterised in that** a means of blocking in rotation blocks the pivoting of said blocking element (16) and **in that** the translation of said blocking element (16) on an initial course of travel (C1) in the direction of said bolt (4) releases said blocking element (16) from the means of blocking in rotation.

3. Antitheft device as claimed in the preceding claim, **characterised in that** in the passive position, the base of said blocking element (16) and the bottom (19a) of said housing (19) cooperate to block the rotation of said blocking element (16).

4. Antitheft device as claimed in the preceding claim, **characterised in that** said blocking element (16) has the shape of a cylindrical pin of which the base comprises at least one radial bar (21a, 21b), with the radial bar (21a, 21b) being housed in a complementary form of the bottom (19a) of the housing (19).

5. Antitheft device according to one of claims 2 to 4, **characterised in that** the upper portion of said housing (19) has at least one shoulder (19b, 19c) that authorises the pivoting of said blocking element (16) until an abutment (19d) of said shoulder (19b), consecutively to the translation of said blocking element (16) towards the bolt (4) releasing the base of said blocking element (16) from the bottom (19a) of said housing (19).

6. Antitheft device according to one of claims 1 to 5, **characterised in that** said retaining member (17) comprises a rod of which a first end (17a) is intended to press on said blocking element (16) in order to hold it in passive position and of which a second end (17b) is intended to be fastened to the lock (8).

7. Antitheft device as claimed in the preceding claim, **characterised in that** it comprises a weak area (Z) configured to generate the start of a rupture in a neighbouring region of said rod.

8. Antitheft device as claimed in the preceding claim, **characterised in that** it comprises a first and a second portion of an antitheft device body (3, 9) and a lock (8) inserted in said second portion of antitheft device body (9), a first portion of antitheft device body (3) receiving the locking and deadlocking means, said lock (8) and said first portion of antitheft device body (3) respectively comprising a means for guiding said retaining member (17), said means for guiding said lock having a ring (25) surrounding said rod on the weak area (Z).

9. Antitheft device according to one of claims 6 to 8, **characterised in that** it comprises a protective cover (6) that is extended by at least one latching lug (6a, 6b, 6c) cooperating with the rod of the retaining member (17) in order to be held to the retaining member (17).

10. Antitheft device as claimed in the preceding claim, **characterised in that** said protective cover (6) comprises a plate that has a substantially square shape that is extended by three latching lugs (6a, 6b, 6c) coming to abut on either side of the rode of the retaining member (17).
